**Europäisches Patentamt**

**European Patent Office**

**Office européen des brevets**

(19)

(11) Publication number : **0 464 212 B1**

(12) **EUROPEAN PATENT SPECIFICATION**

(45) Date of publication of patent specification :
08.03.95 Bulletin 95/10

(21) Application number : **91901555.2**

(22) Date of filing : **26.12.90**

(86) International application number :
**PCT/JP90/01702**

(87) International publication number :
**WO 91/11737 08.08.91 Gazette 91/18**

(51) Int. Cl.⁶ : **G01V 1/00, G01V 1/16**

(54) **EARTHQUAKE DETECTING APPARATUS.**

(30) Priority : **25.01.90 JP 15509/90**

(43) Date of publication of application :
**08.01.92 Bulletin 92/02**

(45) Publication of the grant of the patent :
**08.03.95 Bulletin 95/10**

(84) Designated Contracting States :
**DE FR GB**

(56) References cited :
**DE-A- 3 144 471**
**GB-A- 2 160 319**
**JP-A- 5 888 686**
**JP-A-54 139 774**
**JP-A-55 101 021**
**JP-A-55 116 224**
**JP-A-58 174 882**
**JP-B- 6 341 406**
**JP-Y- 6 139 950**
**US-A- 3 990 039**

(73) Proprietor : **MATSUSHITA ELECTRIC INDUSTRIAL CO., LTD.**
**1006, Oaza Kadoma**
**Kadoma-shi, Osaka-fu, 571 (JP)**

(72) Inventor : **IWABUCHI, Hiroo**
**16, Hukuhara**
**Mizusawa-shi, Iwate 023 (JP)**
Inventor : **KOGA, Ryoichi**
**3810-503, Nimyocho**
**Nara-shi, Nara 631 (JP)**
Inventor : **UNO, Takashi**
**3-22, Tezukayamaminami 1-chome**
**Nara-shi, Nara 631 (JP)**
Inventor : **OOHASHI, Tokuyoshi**
**1-21, Suzaku 6-chome**
**Nara-shi, Nara 631 (JP)**

(74) Representative : **Dr. Elisabeth Jung Dr. Jürgen Schirdewahn Dipl.-Ing. Claus Gernhardt**
**Postfach 40 14 68**
**D-80714 München (DE)**

# Description

## TECHNICAL FIELD

The present invention relates to an earthquake detecting apparatus configured with a vibration sensor for sensoring earthquake vibration and a signal processing means for processing a signal from this vibration sensor.

## TECHNICAL BACKGROUND

Conventionally, for the vibration sensor for sensing earthquake vibration, combinations of two vibration systems having natural vibration frequencies in two frequency bands, to utilize that vibrations other than earthquake vibration generally have frequencies higher than that of earthquake vibration has been used, to distinguish earthquake vibration from shock vibration caused by a collision of an object with an equipment incorporating a vibration sensor.

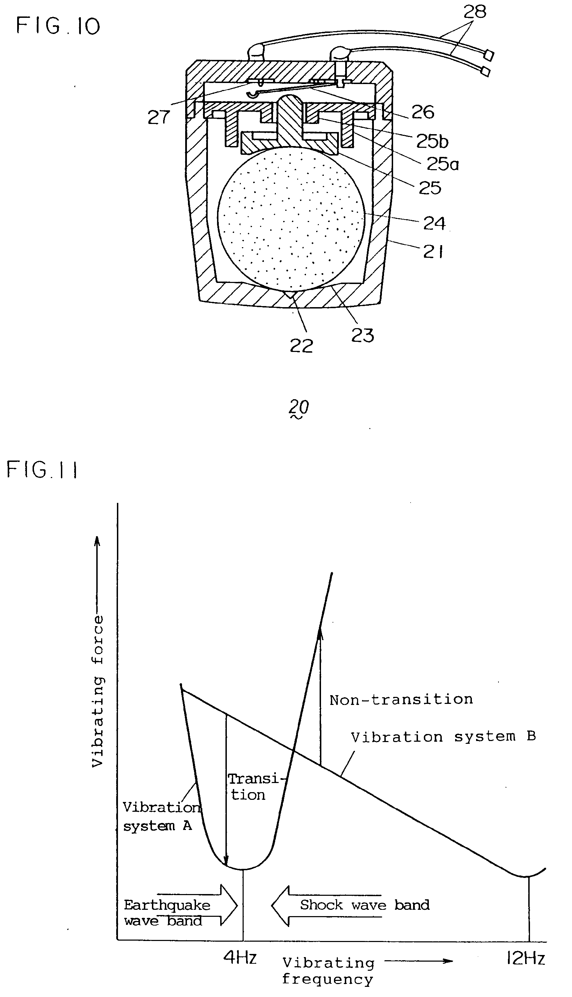

Fig. 10 shows an example thereof. A vibration sensor 20 is configured with: a cone-shaped vibrating surface 23 having a recess 22 whose top end part is small in diameter and which is formed at the central part of the inner bottom surface of a case 21; a comparatively large steel ball 24 for performing reciprocating motion in a manner to be capable of rolling on this vibrating surface 23; a sliding pice guide 25 which moves upwards by rolling of the steel ball 24; sliding piece guides 25a and 25b supporting this sliding piece 25 in a manner slidable in the vertical direction; a movable contact 26 which is pushed up by the sliding piece 25; and a fixed contact 27 for contacting the movable contact 26 when it is pushed up.

In the above-mentioned configuration, when the steel ball 24 bound in the central recess 22 of the cone-shaped vibrating surface 23 is subject to vibration above a certain value in Gal, it runs out from this recess 22 and performs reciprocating motion on the vibrating surface 23. At this time, the movable contact 26 is moved upward by rolling motion of the steel ball 24, contacts the fixed contact 27, and an ON/OFF signal is generated from leads 28.

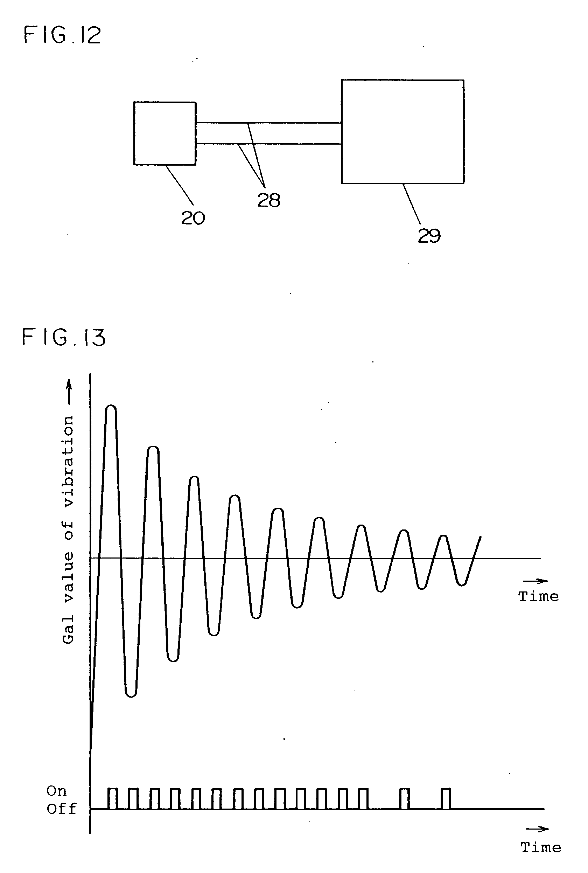

The vibration system dominating the movement of the steel ball 24 of this conventional vibration sensor 20, as shown in Fig. 11, is configured with a vibration system A having a comparatively low natural frequency (for example, about 4 Hz) which is determined from the curvature of a spherical surface replaced by the vibrating surface 23 and the size of the steel ball 24, and with a vibration system B having a comparatively high natural frequency (for example, about 12 Hz) which is determined from the diameter of the top end part of the central recess 22 of the vibrating surface 23 and the size of the steel ball 24. Accordingly, when operating in the earthquake wave band ( 1 - 4 Hz), the steel ball 24 runs out from the recess 22 at the level of the vibration system B, and thereafter moves to the system A because of lower operation level of the vibration system A, and performs reciprocating motion on the vibrating surface 23. Also, when the steel ball 24 operates in the shock wave band (for example, 5 Hz or more) other than earthquake vibration, even when it runs out from the recess 22 at the level of the vibration system B to the vibration system A, unless a vibrating force above the operation level of the vibration system A is applied, no reciprocating motion on the vibrating surface 23 is performed, because the operation level of the vibration system A is higher than it.

However, the actual vibration at a shock or the like sometimes has a frequency close to the earthquake wave band, and even a frequency above 5 Hz sometimes causes a vibrating force exceeding the operation level of the vibration system A, and therefore, as shown in Fig. 12, a signal processing means 29 is connected to the leads 28 of the vibration sensor 20, and thereby an ON/OFF signal of the vibration sensor is processed; and when ON-time pulses above a predetermined time width (for example, 30ms) are generated a predetermined number of times (for example, five times) within a predetermined time (for example 3 sec) with OFF-time above a predetermined time length (for example, 40 ms) sandwiched in-between, this vibration is judged to be an earthquake vibration. The predetermined time width of each of ON-time and OFF-time is set to a value at which a signal at shock wave or the like having a frequency component higher than the earthquake wave is not detected, but since the lengths of ON-time and OFF-time disperse each are set to have a margin to some extent. For example, in the case where the predetermined time widths of ON-time and OFF-time are set respectively to 50 ms and 60 ms, the following holds:

$$\frac{1}{(0.05 + 0.06) \times 2} \fallingdotseq 4.5 \text{ (Hz)},$$

and therefore, principally any vibration having a frequency above 5 Hz is not detected; but actually the lengths of ON-time and OFF-time disperse, and therefore there is a fear that the main earthquake vibration might not be detected. Accordingly, the above-mentioned predetermined time widths of ON-time and OFF-time are set to 30 ms and 40 ms, respectively, with some margin, and from the relation

$$\frac{1}{(0.03 + 0.04) \times 2} \fallingdotseq 7 \text{ (Hz)},$$

any vibration having a frequency above 7 Hz is not detected. Also, the number of times of ON-pulses and the predetermined time, during which these pulses are counted, are set to values at which shock wave or the like having a frequency close to the earthquake wave band is not detected.

The above-mentioned conventional vibration sensor as has an essential element of causing an unstable vibration because two vibration systems exist on the same vibrating surface. This is because: when the steel ball 24 is vibrating in the vibration system A, in the midst of vibration there is an instant that it passes through the central recess 22 of the vibrating surface 23, and therefore at this time it returns once to the vibration system B, and this causes an interference between the two vibration systems; and when the steel ball 24 is vibrating in the vibration system A, because of smallness of diameter of the top end part of the recess 22, the center of gravity of the steel ball 24 is acting always out of the range of the recess 22; and when passing through the dent, this changes the direction of motion of the steel ball 24, or induces a rotary motion.

Also, performances requested for the earthquake detecting system include an ability of discriminating the earthquake wave from the vibration caused by a collision of an object with the equipment incorporating the vibration sensor in addition to the function of reliably detecting the earthquake wave. Where the equipment incorporating the vibration sensor is fixed firmly, the vibration caused by a shock is small; and the frequency of this vibration is high enough in comparison with the earthquake wave, and discrimination therebetween is easily made. On the other hand, where this equipment is fixed loosely by piping or the like the vibration is large and the frequency becomes close to that of the earthquake wave, and therefore discrimination therebetween becomes difficult. To detect the earthquake wave reliably and discriminate the earthquake wave from the shock wave, it is required that the frequency characteristic of the vibration sensor is flat in the earthquake wave band (1.4 - 3.3 Hz) and rises sharply before the shock wave band (for example, 5 Hz or more). It is difficult to realize such a characteristic by a single vibration system, and the vibration system of the vibration sensor as described above intends to realize this characteristic by accomplishing a combination of two vibration systems. Now, description is made on characteristics of the vibration system of this conventional vibration sensor using Fig. 11. The natural frequency of the vibration system A is, for example, about 4 Hz, and the natural frequency of the vibration system B is, for example, about 12 Hz. When operating in the earthquake wave band, the vibration member 24 runs out from the recess 22 at the level of the vibration system B having a characteristic of gentle slope in this band, and thereafter it moves to the vibration system A because of the lower operating level of the vibration system A, and it performs reciprocating motion while turning on the contact 26. When the frequency becomes high and the operating level of the vibration system A becomes higher than that of the system B, it does not move from the vibration system B to the vibration system A by the same vibrating force. When it does not vibrate in the vibration system A, the contact is not turned on, and therefore the operating point moves to the vibration system A and rises sharply.

This linked vibration system has two vibration systems on the same vibrating surface, and therefore has an element making the vibration unstable essentially. Why is that the vibration member 24 has originally a degree of freedom of 360° with respect to the vibrating direction, and therefore a slight disturbance to the vibrating direction is likely to make the vibration unstable, and as shown in the conventional example, when the recess 22 exists on the center of the vibrating surface 23, it changes the direction when the vibration member 24 passes through this recess 22, or induces a rotary motion of the vibration member 24.

As a means for discriminating earthquake wave from shock wave on the signal processing means 28 side, such a method is adopted that which sets a lower limit value of pulse width of the ON/OFF signal from the vibration sensor 20, and does not detect pulses below this lower limit value. Actually, however, the pulse width of the ON/OFF signal from the vibration sensor disperses, and the above-mentioned lower limit value is required to be set with a considerable margin, and therefore this method has no effect particularly on shock wave close to the earthquake wave band as a frequency filter.

Also, as shown in Fig. 13, a worse shock resistance in the actual shock test takes place before or after disappearance of signal pulses after gradual attenuation of shock wave; and this is caused in the case where the movement of the vibration member becomes weak and unstable, and missing of the signal pulses takes place, and the frequency is lowered equivalently, and the pulses are not filtered by the above-mentioned frequency filter.

GB-A-2 160 319 discloses an apparatus for detecting seismic waves including a vibration sensor and signal processing means, wherein the vibration sensor detects the vertical and horizontal motion of the mercury.

DISCLOSURE OF THE INVENTION

Then, a first object of the present invention is to obtain a vibration system which satisfies characteristics requested for a vibration sensor, and particularly to obtain a vibration system which is stable even having a plurality of vibration systems.

A second object of the present invention is to generate characteristic signal pulses in the shock wave band, and specifically to obtain a vibration sensor wherein a signal wherein the OFF width of signal pulses is considerably short is outputted to make an equivalently high frequency, and thereby discrimination from earthquake wave is made easy, and dropout of signal pulses when having been attenuated is hard to take place.

A third object of the present invention is to provide a optimum detection for a signal processing means for processing a signal from such a vibration sensor.

Then, to attain the above-mentioned first object, the sensor in the present invention is configurated with a spring vibration system wherein a drop-shaped mercury is supported at the bottom thereof and the surface tension of mercury acts as a spring.

Further, in order to attain the second object, in the present invention, a vibration system is configured wherein a drop-shaped mercury and electrodes surrounding this mercury contact in the frequency band of shock wave and cause a resonance.

Further, in order to attain the third object, in the present invention, the ON width and the OFF width of signal pulses recognized as adaptable pulses and the number of pulses for judging to be earthquake are optimized.

Further, to attain the second object, the apparatus of the present invention, comprises: a vibration sensor wherein mercury is placed in a recess installed at the center of a vibrating surface having a gentle descending slope toward the center, and electrodes which do not contact the above-mentioned mercury normally and contact only during vibration are installed around the above-mentioned mercury; and a signal processing means which processes an ON/OFF signal of the above-mentioned vibration sensor, and judges that this is an earthquake; and the amount of the above-mentioned mercury is set to 0.4 - 0.5 gr, the depth of the above-mentioned recess is set to 0.45 - 0.55 mm, the bottom face of the above-mentioned recess is made smaller than the opening thereof and the wall surface is formed in a taper shape, the inner diameter of the bottom face of the above-mentioned recess is set to 2.5 - 3.0 mm, and the distance between the above-mentioned mercury and the above-mentioned electrode is set to 0.5 - 1.5 mm.

In the vibration sensor configurating the earthquake detecting apparatus of the present invention, the vibration system is configured with a basic vibration system by means of a spring action of the surface tension of a drop-shaped mercury which is supported at the bottom thereof, and vibration system by means of mercury rolling motion. The former of these two vibration systems is configured with a sort of spring system of surface tension, and the latter thereof is operated by gravity, and the operating principles thereof differ from each other, and both do not interfere with each other even they operate on the same vibrating surface. Also, the spring system configured by means of surface tension is stable because it depends only on the physical values of mercury. Also in the vibration system configured by means of rolling motion, the range of movement of the center of gravity of the mercury ball is mainly within the range of the central recess of the vibrating surface, and the rolling motion itself is performed within a comparatively stable range.

Also, configuration is made in a manner that the drop-shaped mercury contact the electrodes and causes a resonance. This mercury is deformed into an elliptic shape by a shock of collision with the electrode, and thereafter moves along the electrodes in a form of replacing the major axis and the minor axis of the ellipse with each other, and therefore the distance between the electrode and the mercury ball is shortened equivalently, and the OFF time of signal pulses is considerably shortened. Also, this resonance phenomenon is caused by that the mercury ball receives energy from the electrode, and therefore the vibration is attenuated quickly when the vibrating force attenuates and the mercury ball once separates from the electrode.

Furthermore, the ON width and the OFF width of signal pulses recognized to be adaptable pulses and the number of pulses for judging to be earthquake are optimized, and therefore the signal pulses of the vibration sensor having these three kinds of vibration systems can be judged whether it is caused by earthquake wave or shock wave.

BRIEF DESCRIPTION OF THE DRAWINGS

Fig. 1 is a cross-sectional view of a major part of an earthquake detecting apparatus in an embodiment of the present invention.

Fig. 2 is an explanatory view of operation of a vibration system of the same.

Fig. 3 is a configuration view of the same apparatus.

Fig. 4 is an explanatory view of characteristics of the same vibration system.

Fig. 5 is an explanatory view of a state of deformation of mercury in the same vibration system.

Fig. 6 is an explanatory view of shock wave characteristics of a vibration sensor of the same.

Fig. 7 is a magnified explanatory view of a recess of a vibration sensor showing another embodiment of the same.

Fig. 8 is a specific block diagram in the configuration view of Fig. 3.

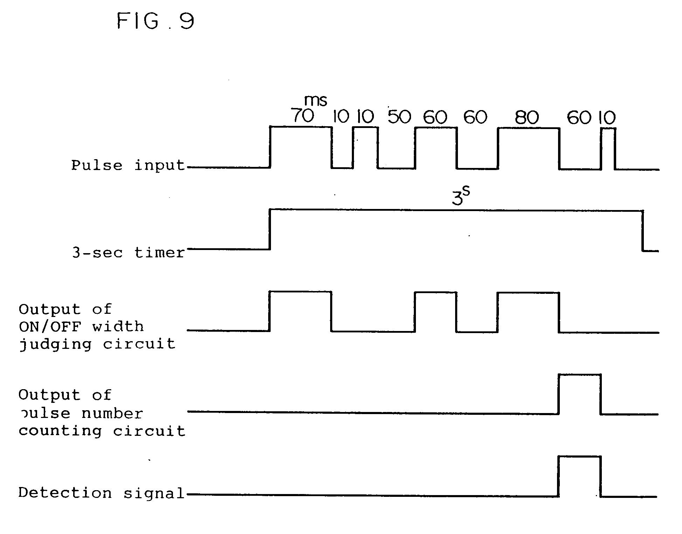

Fig. 9 is a timing chart in the block diagram of Fig. 8.

Fig. 10 is a cross-sectional view of a major part of a vibration sensor in a conventional example.

Fig. 11 is an explanatory view of characteristics of a vibration system of the same vibration sensor.

Fig. 12 is a block diagram of the same. Fig. 13 is an explanatory view of shock wave characteristics of the same vibration sensor.

THE BEST FORM FOR EMBODYING THE INVENTION

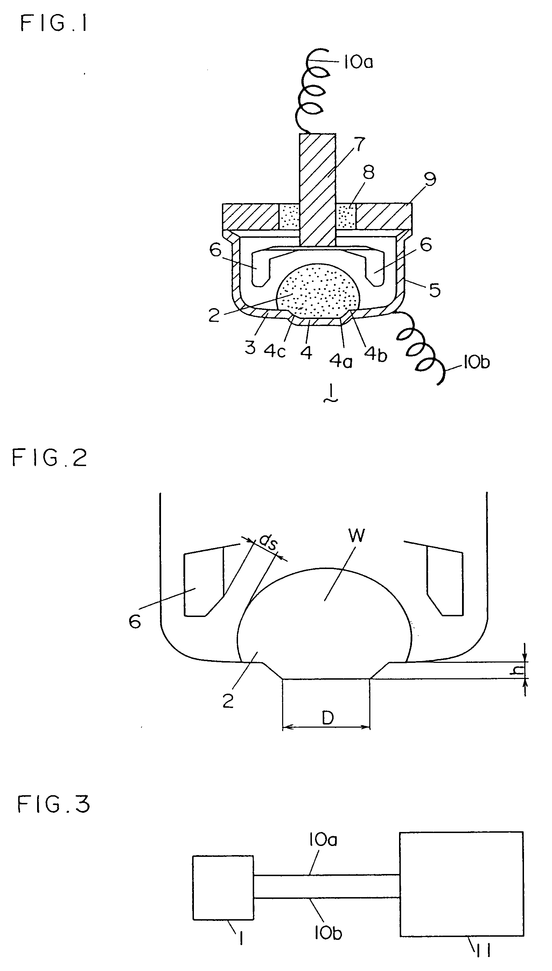

Hereinafter, description is made on an embodiment of the present invention based on the appended drawings. In Fig. 1, a vibration sensor 1 is configurated with a pot 5 holding mercury 2, a cover 9 thereof, and electrodes 6 located in the pot 5. Then, the vibration sensor 1 places the drop-shaped mercury 2 to become a vibration member in a central recess 4 of a vibrating surface 3 of the pot 5 having a gentle descending slope toward the center. Recess 4 is made in a manner that its bottom 4a is smaller than an opening 4b thereof, to configurate a taper-shaped wall surface 4c, and support the mercury 2 also from the side, thereby stably to hold the mercury 2.

And, a weight W of the mercury 2, a depth h of the recess 4 and a diameter D of the bottom 4a as shown in Fig. 2 are determined respectively as follows in a manner that a part of the mercury 2 protrudes from the opening 4b when the mercury 2 is placed in the recess 4:

$$w = 0.4 - 0.5 \, g$$
$$h = 0.45 - 0.55 \, mm$$
$$D = 2.5 - 3.0 \, mm.$$

The peripheral part of the vibrating surface 3 further rises in a cylindrical shape, to configurate the pot 5. And, the electrodes 6 installed in a circumferential shape with predetermined intervals kept from the mercury 2 are supported by a conductive stay 7, and this stay 7 is further fixed to the cover 9 through an insulator glass seal 8, and further this cover 9 is stuck to the pot 5. The pot 5 is made from a conductive material (for example, iron) which is hard to produce amalgam with mercury, and it configurates a pair of electrodes together with the above-mentioned electrodes 6. A signal from the vibration sensor 1 is taken out by connecting leads 10a and 10b to the stay 7 and the pot 5, respectively. The leads 10a and 10b are connected to a signal processing means 11 as shown in Fig. 3. Then a distance ds between the mercury 2 and the electrode 6 shown in Fig 2 is determined as follows in a manner that a third vibration system configurated by a collision of the mercury 2 with the electrode 6 as described later is generated in the region of shock wave but close to earthquake wave:

$$ds = 0.5 - 1.5 \, mm.$$

Next, description is made on action in this embodiment.

In this embodiment, by the above-mentioned configuration, the weight of the mercury 2 is set to 0.4 - 0.5 g which is a little larger than the weight (about 0.3 g) which makes the mercury 2 spherical, and the size of the recess 4 is set in a manner that the mercury 2 protrudes partly from the opening 4b when placed as mentioned above, and the bottom 4a of the recess 4 is made smaller than the opening 4b thereby, and the wall surface 4c thereof is formed in a taper-shape, and thereby the mercury 2 is held stably.

This means that the mercury 2 is deformed at the boundary linking the opening 4b and the vibrating surface 3, but the surface tension of the mercury 2 acts in a manner that this deformation becomes uniform along the whole periphery of the mercury 2; and therefore the mercury 2 is located in the center of the recess 4, and the boundary condition of a vibration system by means of surface tension is determined; and thus a first vibration system is configurated.

The first vibration system dominating the movement of the mercury 2 of the vibration sensor 1 of this embodiment is configurated with a sort of spring system based on the surface tension of mercury which vibrates only at the top part of the mercury 2 while holding intact the bottom thereof in the recess 4.

Further, the mercury 2 configurates a second vibration system by rolling by the vibrating force. This second vibration system is configurated by rolling motion of mercury which rolls out from the recess 4.

The former of these two vibration systems is operated by surface tension, while the latter thereof is operated by gravity, and the operation principles thereof differ from each other, and therefore both do not interfere with each other even if they operate on the same vibrating surface. Also, the vibration of the spring system by means of surface tension depends mainly on the physical values of mercury, and therefore is stable. Further, as to the vibration by means of rolling motion, the inner diameter of the bottom of the recess 4 is set at 2.5 - 3.0 mm, and the distance between the mercury 2 and the electrode 6 installed therearound is set at 0.5 - 1.5 mm which is smaller than the inner diameter; and therefor the range of movement of the center of gravity of the mercury ball is mainly within the range of the central recess of the vibrating surface, and performs a comparatively stable rolling motion.

In the second vibration system, the mercury 2 is rolled by the vibrating force and is about to run out from the recess 4, and the natural frequency of this vibration system is also determined from the shape of this recess 4 and the weight W of the mercury 2. The natural frequency of the mercury 2 in running out from this recess 4 is desirably set at 10 Hz or more to secure the uniform sensitivity in the earthquake wave band.

And, since the weight of the mercury 2, the distance between the mercury 2 and the electrode 6 and the like are made as mentioned above, in the shock wave band, particularly in the case of shock wave having a frequency close to that of the earthquake wave band, such a resonance phenomenon is caused that the mercury 2 strongly touches the electrode 6 and is repelled by the electrode 6. This configurates a third vibration system by means of resonance of the mercury and the electrode; and at this time, the mercury 2 is deformed into an elliptic shape when viewed from above by a shock of collision with the electrode 6, and thereafter moves between the electrodes in a form as if exchanging the major axis and the minor axis of the ellipse with each other.

As described above, in this embodiment, when a horizontal vibrating force is applied to the vibration sensor 1, the mercury 2 which is a vibration member of the vibration sensor 1 is vibrated by three kinds of vibration systems. The first vibration system is a vibration system where the surface tension of the mercury 2 acts as a spring, and the resonance point is set to about 8 Hz - 10 Hz, and therefore the vibration member is comparatively hard to move in the earthquake wave band, and is easy to move when the frequency becomes high. The second vibration system is a what is called pendulum vibration system which is made by rolling motion of the mercury in the recess 4, and actually functions that by making the sensitivity in the earthquake wave band uniform by raising the frequency of the resonance point, thereby to hold the mercury 2 against up to a certain vibrating force.

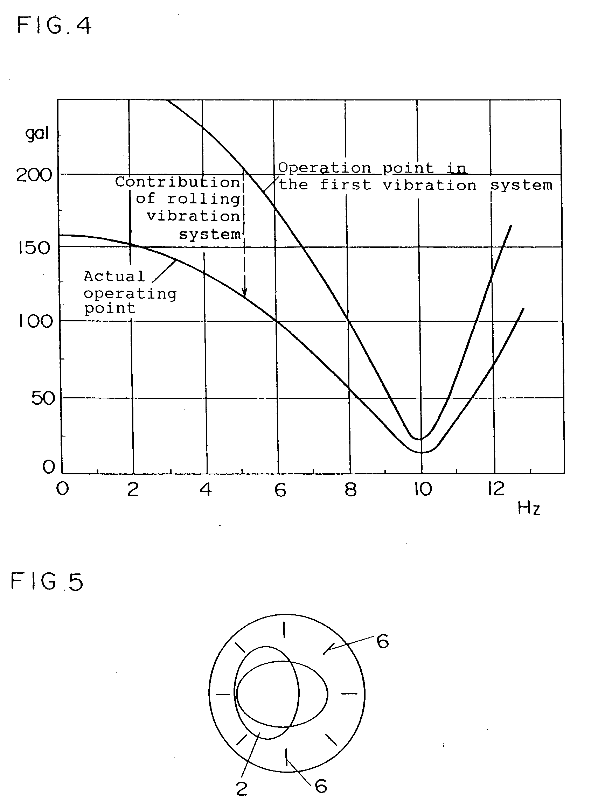

In the earthquake wave band, the first vibration system and the second vibration system are operated in a linked manner. This means that the mercury 2 makes a rolling motion while swung by the surface tension and makes a reciprocating motion between plural electrodes 6. Fig. 4 shows operating characteristics of the vibration sensor 1 aiming at the first and the second vibration systems when the resonance point of the first vibration system is set to 10 Hz. By only the first vibration system whose resonance point is 10 Hz, the operating point is raised greatly, but the actual operating point is set by adding the second vibration system by means of rolling motion thereto. In the example in Fig. 4, the interval between the mercury 2 and the electrode 6 is only 0.7 mm, and the effect of the distance between the electrode 6 and the mercury 2 on the characteristics is large. This effect becomes larger when the vibration system has a more linear characteristic against the vibrating force. In the case of this vibration sensor 1, it does not operate by the first vibration system having a linear characteristic, and operated only after adding of the second vibration system having a characteristic of running out by a certain vibrating force or larger works, and dispersion of the operating point due to the distance ds between the mercury 2 and the electrode 6 is reduced by a large extent, because the role of the second vibration system by means of rolling motion is comparatively large in the earthquake wave band.

The third vibration system is of vibration as a liquid drop which is generated by the surface tension of the drop-shaped mercury 2 when the mercury 2 collides strongly with the electrode 6. In this vibration system, the mercury 2 receives vibration energy directly from the electrode 6 having the weight W and surface tension of the mercury 2, the distance ds between the mercury 2 and the electrode 6, the shape of the mercury 6 and the like given as vibration parameters, and therefore the vibration becomes intensive at a resonance. Fig. 5 shows a pattern of this vibration. When colliding with the electrode, 6, the mercury 2 becomes thin in the direction of the electrode 6, and thereafter repels owing to the surface tension, stretches in an ellipsoidal shape. It is considered that this vibration mode basically corresponds to the secondary mode of vibration caused by the surface tension of a liquid drop. When this vibration mode is generated, the distance between the electrode 6 and the mercury 2 becomes very close to each other. Accordingly, the width of OFF time of the ON/OFF signal of the vibration sensor 1 is reduced to a large extent, and when the frequency of the vibration at this time is judged by the signal processing means 11, it is regarded of an equivalently high frequency, and therefore even in the case of a shock wave of a frequency near the earthquake wave band, this is not misjudged to be earthquake.

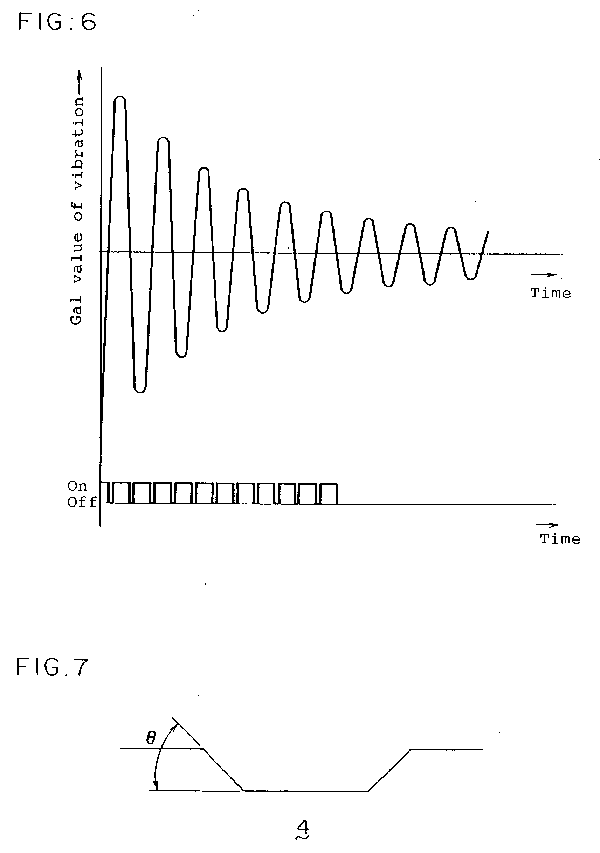

Also, this resonance phenomenon is caused by that the mercury ball receives energy from the electrode, and therefore when the vibrating force attenuates and the mercury 2 depart from the electrode 6 once, the vibration attenuates quickly as shown in Fig. 6. Consequently, such a misjudgment is not happen to be made that drop-out of ON-pulses takes place when the ON-pulse signal of the vibration sensor 1 begins to disappear, and the signal processing means 11 misjudges the signal as that of earthquake of an equivalently low frequency.

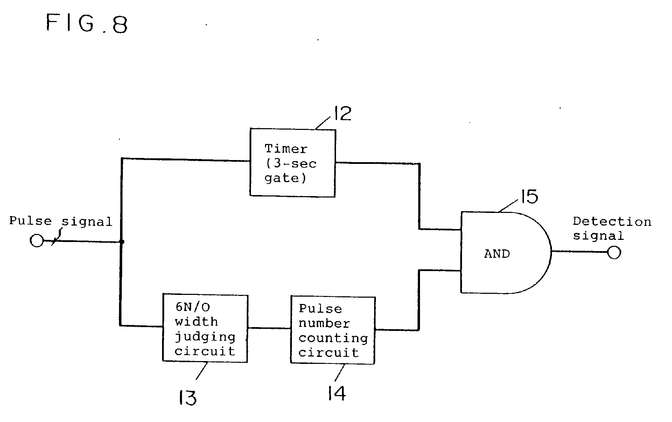

Further, signal pulses from the vibration sensor 1 are inputted to the signal processing means 11 consisting of a microcomputer. This signal processing means 11, as shown in Fig. 8, is configured with a timer 12 for issuing a signal of three seconds, a judging circuit 13 comprising a filter for judging the widths of ON and OFF of the signal pulses, a pulse number counting circuit 14, and an AND circuit 15. Then, when signal pulses are inputted from the vibration sensor 1, the judging circuit 13 judges whether or not the ON width of the pulses is longer than a lower limit value $T_n$ and the OFF width thereof is longer than a lower limit value $T_f$; and when the pulses satisfy these conditions, the pulse number counting circuit 14 detects this as one pulse; and when this takes place a predetermined number of times within a predetermined time set by the three-second timer 12, judgment is made that it is the earthquake wave. Then in this embodiment, in order not detect the shock wave, when the ON/OFF signal of the vibration sensor 1 contains ON-time pulses of 40 ms or more, at a rate of three times or more within three seconds, with OFF-time of 40 ms or more lying in-between, this wave is judged as of an earthquake wave.

Furthermore, as to the recess 4, the shape of the wall surface 4c supporting the mercury 2 from the side in the recess 4 is particularly important; and in the recess 4 as shown in Fig. 7, the slant angle θ of the wall surface 4c is particularly set to θ = 40° to 50°, which is close to the set angle of mercury. By making as described above, the front face of the wall surface 4c uniformly contacts the mercury 2 and can hold it, and therefore the vibration system is stabilized, and the apparatus can function more reliably.

APPLICABILITY IN INDUSTRIES

As described above, according to the present invention, the vibration system of the vibration sensor is configured with the basic vibration system by means of a spring formed based on the surface tension of the drop-shaped mercury which is supported at the bottom thereof and the vibration system by means of rolling motion of mercury; the former of these two vibration systems is configured with a sort of spring system of surface tension, and the latter is operated by gravity, and therefore operating principles thereof differ from each other; and even if operated on the same vibrating surface, the both do not interfere with each other, and a stable vibration system is obtained.

Also, the apparatus is configured in a manner that a drop-shaped mercury contacts an electrode and causes a resonance, and can generate a characteristic signal that OFF-time of signal pulses is considerably short. Also, this resonance phenomenon is caused by that the mercury ball receives energy from the electrode, and therefore when the vibrating force attenuates and the mercury ball depart once from the electrode, the vibration attenuates quickly, and the pattern of the characteristic signal in the shock wave band is not broken.

Furthermore, the lower limit value of the OFF width of the signal pulses is set at what is recognized as pulses which are adaptable in the signal processing means, and therefore the characteristic signal in the shock wave band can be easily discriminated from the width of earthquake.

**Claims**

1. An earthquake detecting apparatus comprising
   a vibration sensor (1) and signal processing means (11) for receiving a signal from said vibration sensor (1);
   said vibration sensor comprising:
   mercury (2) disposed in the center of a vibrating surface (3);
   an area near to said center of said vibrating surface (3) having a gentle descending slant toward said center;
   detecting means (4,6,7,10a,10b) for detecting a state of said mercury (2) on said vibrating surface (3);
   **characterized** in that
   electrodes (6) are provided for being contacted by said mercury (2) at vibration time thereby outputting a signal;
   said mercury (2) is of drop-shape;

said mercury (2) of drop-shape is placed in a recess (4) installed at the center of said vibrating surface (3), said recess (4) having a gentle descending slant toward the center, wherein a part of said mercury (2) of drop-shape protrudes from said recess (4);
   a first vibration system (2,4) is provided based on surface tension of said mercury (2) of drop-shape;
   a second vibration system (2) is provided based on rolling motion of said mercury of drop-shape (2) for vibrating in a major frequency range of earthquake waves;
   a third vibration system (2,6) is provided comprising said mercury (2) of drop-shape and plural electrodes (6) disposed with a predetermined interval (ds) from said mercury (2), said third vibration system being capable of making a resonance in a frequency region which is higher than a major frequency range of earthquake wave; and
   said signal processing means (11) receive signals from said electrodes (6) and process an ON/OFF signal.

2. An earthquake detecting apparatus according to claim 1 characterized in that
   said signal processing means (11) process said signals in a manner that a lower limit value $T_f$ is set for the pulse width of an OFF-signal at detection of signal pulses generated from said vibration sensor (1), and if the pulse width of said OFF-signal is $T_f$ or less, the pulses are not recognized to be signal pulses.

3. An earthquake detecting apparatus according to claim 1 or 2, characterized in that
   the angle of the wall surface (4c) of said recess (4) provided at said center of said vibrating surface (3) is set substantially equal to the wet angle of said mercury (2) in said recess (4).

4. An earthquake detecting apparatus according to one of claims 1 to 3, characterized in that
   an amount of said mercury (2) is set 0.4 to 0.5g, depth of said recess (4) is set 0.45 to 0.55 mm, the bottom (4a) of said recess (4) is made smaller than the opening (4b), the wall surface (4c) is formed in a taper shape, the inner diameter (D) of said bottom (4a) of said recess is set 2.5 to 3.0 mm and said distance (ds) between said mercury (2) and said electrode (6) is set 0.5 to 1.5 mm.

5. An earthquake detecting apparatus according to claim 4, characterized in that
   the angle of said wall surface (4c) of said recess is set 40 to 50°.

6. An earthquake detecting apparatus according to claim 4 or 5, characterized in that

said signal processing means (12) judges an ON/OFF signal as of an earthquake when it contains pulses of ON-time of 40 ms or more, at a rate of three times or more within three seconds, with OFF-time of 40 ms or more lying in-between.

## Patentansprüche

1. Eine erdbebennachweisende Einrichtung, die aufweist:

einen Vibrationssensor (1) und eine signalverarbeitende Einrichtung (11) zum Empfangen eines Signals von dem Vibrationssensor (1);

wobei der Vibrationssensor aufweist:

Quecksilber (2), das in der Mitte einer Vibrationsfläche (3) angeordnet ist;

einen Bereich nahe der Mitte der Vibrationsfläche (3), der eine ein wenig abfallende Neigung zu der Mitte hin hat;

eine Detektiereinrichtung (4, 6, 7, 10a, 10b) zum Nachweisen bzw. Feststellen eines Zustands des Quecksilbers (2) auf der Vibrationsfläche (3);

**dadurch gekennzeichnet,** daß

Elektroden (6) vorgesehen sind, um zum Zeitpunkt einer Vibration durch das Quecksilber (2) miteinander in Kontakt gebracht zu werden und dadurch ein Signal auszugeben;

das Quecksilber (2) von Tropfenform ist;

das Quecksilber (2) von Tropfenform in einer Aussparung (4) angeordnet ist, die in der Mitte der Vibrationsfläche (3) angeordnet ist, wobei die Aussparung (4) eine ein wenig abfallende Neigung zur Mitte hin hat, wobei ein Teil des Quecksilbers (2) von Tropfenform aus der Aussparung (4) hervorsteht;

ein erstes Vibrationssystem (2, 4) auf Basis einer Oberflächenspannung des Quecksilbers (2) von Tropfenform vorgesehen ist;

ein zweites Vibrationssystem (2) auf Basis einer Roll- bzw. Wälzbewegung des Quecksilbers von Tropfenform (2) vorgesehen ist, um in einem größeren Frequenzbereich von Erdbebenwellen zu schwingen bzw. vibrieren;

ein drittes Vibrationssystem (6) vorgesehen ist, das das Quecksilber (2) von Tropfenform und mehrere Elektroden (6) aufweist, die mit einem vorbestimmten Abstand (DS) von dem Quecksilber (2) angeordnet sind, wobei das dritte Vibrationssystem in der Lage ist, eine Resonanz in einem Frequenzbereich durchzuführen, der höher ist als ein größerer Frequenzbereich einer Erdbebenwelle; und

die signalverarbeitende Einrichtung (11) Signale von den Elektroden (6) empfängt und ein An/Aus-Signal erzeugt.

2. Eine erdbebennachweisende Einrichtung nach Anspruch 1, dadurch gekennzeichnet, daß

die signalverarbeitende Einrichtung (11) die Signale auf eine Weise verarbeitet, daß ein unterer Grenzwert $T_f$ gesetzt ist für die Impulsbreite eines Aus-Signals bei Nachweis von Signalimpulsen, die von dem Vibrationssensor (1) erzeugt worden sind, und wenn die Impulsbreite des Aus-Signals $T_f$ oder weniger ist, die Impulse nicht als Signalimpulse erkannt werden.

3. Eine erdbebennachweisende Einrichtung nach Anspruch 1 oder 2, dadurch gekennzeichnet, daß

der Winkel der Wandfläche (4c) der Aussparung (4), die in der Mitte der Vibrationsfläche (3) vorgesehen ist, im wesentlichen gleich dem Benetzungswinkel des Quecksilbers (2) in der Aussparung (4) eingestellt ist.

4. Eine erdbebennachweisende Einrichtung nach Anspruch 3, dadurch gekennzeichnet, daß

eine Menge des Quecksilbers (2) 0,4 bis 0,5 g, eine Tiefe der Aussparung (4) 0,45 bis 0,55 mm beträgt, der Boden (4a) der Aussparung (4) kleiner als die Öffnung (4b) ausgebildet ist, die Wandfläche (4c) in einer sich verjüngenden oder konischen Form ausgebildet ist, der Innendurchmesser (D) des Bodens (4a) der Aussparung 2,5 bis 3,0 mm und der Abstand (DS) zwischen dem Quecksilber (2) und der Elektrode (6) 0,5 bis 1,5 mm beträgt.

5. Eine erdbebennachweisende Einrichtung nach Anspruch 4, dadurch gekennzeichnet, daß

der Winkel der Wandfläche (4c) der Aussparung 40° bis 50° beträgt.

6. Eine erdbebennachweisende Einrichtung nach Anspruch 4 oder 5, dadurch gekennzeichnet, daß

die signalverarbeitende Einrichtung (12) ein An/Aus-Signal als zu einem Erdbeben zugehörig einschätzt, wenn es Impulse von einer An-Zeit von 40 ms oder mehr bei einer Rate von 3 Impulsen oder mehr innerhalb von 3 Sekunden und mit einer Aus-Zeit von 40 ms oder mehr zwischen diesen enthält.

## Revendications

1. Dispositif de détection d'onde sismique comprenant :

un capteur de vibration (1) et un moyen de traitement de signal (11) pour recevoir un signal à partir du capteur de vibration (1),

ledit capteur de vibration comprenant :

du mercure (2) disposé au centre de la surface vibrante (3),

une zone près dudit centre de ladite surface vibrante (3) ayant une légère pente descendant vers ledit centre,

un moyen de détection (4, 6, 7, 10a, 10b) pour détecter l'état dudit mercure (2) sur ladite surface vibrante (3),

caractérisé en ce que

les électrodes (6) sont prévues pour être contactées par ledit mercure (2) au moment de la vibration sortant de ce fait un signal,

ledit mercure (2) est sous forme de goutte,

ledit mercure (2) sous forme de goutte est placé dans un évidement (4) installé au centre de ladite surface vibrante (3), ledit évidement (4) ayant une légère pente descendante vers le centre, dans lequel une partie dudit mercure (2) sous forme de goutte dépasse de l'évidement (4),

un premier système vibrant (2, 4) est prévu sur la base de la tension superficielle dudit mercure (2) en forme de goutte,

un second système vibrant (2) est procuré sur la base du mouvement roulant dudit mercure en forme de goutte (2) pour vibrer dans une plage de fréquences principale des ondes sismiques,

un troisième système vibrant (2, 6) est procuré comprenant ledit mercure (2) en forme de goutte et de multiples électrodes (6) disposées à l'intervalle prédéterminé (ds) dudit mercure (2), ledit troisième système vibrant étant capable d'établir une résonance dans le domaine de fréquence qui est plus élevée que la plage de fréquences principale de l'onde sismique, et

ledit moyen de traitement de signal (11) reçoit les signaux à partir desdites électrodes (6) et traite un signal contact FERME/contact OUVERT.

2. Dispositif de détection d'onde sismique selon la revendication 1, caractérisé en ce que

ledit moyen de traitement de signal (11) traite lesdits signaux de sorte qu'une valeur limite inférieure $T_f$ est fixée pour la durée d'impulsions d'un signal contact OUVERT à la détection des impulsions de signal produites à partir dudit capteur de vibration (1) et si la durée d'impulsion dudit signal contact OUVERT est $T_f$ ou moins, les impulsions ne sont pas reconnues comme des impulsions de signal.

3. Dispositif de détection d'onde sismique selon la revendication 1 ou 2, caractérisé en ce que

l'angle de la surface de paroi (4c) dudit évidement (4) prévu audit centre de ladite surface vibrante (3) est fixé pratiquement égal à l'angle mouillé dudit mercure (2) dans ledit évidement (4).

4. Dispositif de détection d'onde sismique selon l'une quelconque des revendications 1 à 3, caractérisé en ce que

la quantité dudit mercure (2) est fixée de 0,4 à 0,5 g, la profondeur dudit évidement (4) est fixée de 0,45 à 0,55 mm, le fond (4a) dudit évidement (4) est rendu plus petit que l'ouverture (4b), la surface de la paroi (4c) est formée sous forme conique, le diamètre interne (D) dudit fond (4a) dudit évidement est fixé de 2,5 à 3,0 mm et ladite distance (ds) entre ledit mercure (2) et ladite électrode (6) est fixée de 0,5 à 1,5 mm.

5. Dispositif de détection d'onde sismique selon la revendication 4, caractérisé en ce que

l'angle de ladite surface de paroi (4c) dudit évidement est fixé de 40 à 50°.

6. Dispositif de détection d'onde sismique selon la revendication 4 ou 5, caractérisé en ce que

ledit moyen de traitement de signal (12) juge un signal contact FERME/contact OUVERT comme celui d'une onde sismique lorsqu'il contient des impulsions de durée de contact FERME de 40 ms ou plus à un taux de trois fois ou plus à l'intérieur de trois secondes, avec une durée de contact OUVERT de 40 ms ou plus située entre celles-ci.

FIG.1

FIG.2

FIG.3

## FIG.4

## FIG.5

FIG:6

Gal value of vibration →

Time

On
Off

Time

FIG.7

θ

4

FIG.8

FIG.9

Pulse input

3-sec timer

Output of
ON/OFF width
judging circuit

Output of
pulse number
counting circuit

Detection signal

FIG.10

FIG.11

FIG.12

20

28

29

FIG.13

Gal value of vibration →

Time →

On
Off

Time →